# EUROPEAN PATENT APPLICATION

(11) **EP 1 594 068 A2**
(43) Date of publication of application: **09.11.2005**
(21) Application number: 05102883.5
(22) Date of filing: 12.04.2005
(51) Int. Cl.: G06F 13/42

(54) **PCI Bus system**

(30) Priority: 08.05.2004 KR 2004032458
(71) Applicant: SAMSUNG ELECTRONICS CO., LTD., Suwon-si, Gyeonggi-Do 442-742 (KR)
(72) Inventor: Oak, Seung-soo 218-301, Sibeomdanji Wooseong Apt., Gyeonggi-do (KR); Lee, Sang-hyong 2-705, Donghyun Apt., Seoul (KR); Kim, Jin-hyung 303, 2-B-dong, 524-3, Mangpo-dong, Gyeonggi-do (KR)
(74) Representative: Geary, Stuart Lloyd

(57) **Abstract**

The present invention discloses a method for sending data from a second agent to a first agent in a bus system having a host and at least two agents of the first agent and at least one second agent. The first and second agents are connected by an interrupt signal line externally provided to the bus system, and the second agent sends an interrupt signal to the second agent without the intervention of the host. The first agent having received the interrupt signal directly receives data stored in the second agent.

## Description

The Peripheral Component Interconnect (PCI) local bus is a kind of local bus providing data pathways that directly connect the central processing unit (CPU) and peripheral devices and transfers data at high speed, and has the advantage of much better stability and expandability than the earlier Video Electronics Standard Association (VESA) local (VL) bus. Unlike the VL bus, the PCI bus can be connected to any kind of system CPU. That is, since the PCI bridge interfaces the system CPU with the PCI bus, the PCI bus can be connected to any system CPU if a PCI bridge is provided for a system CPU.

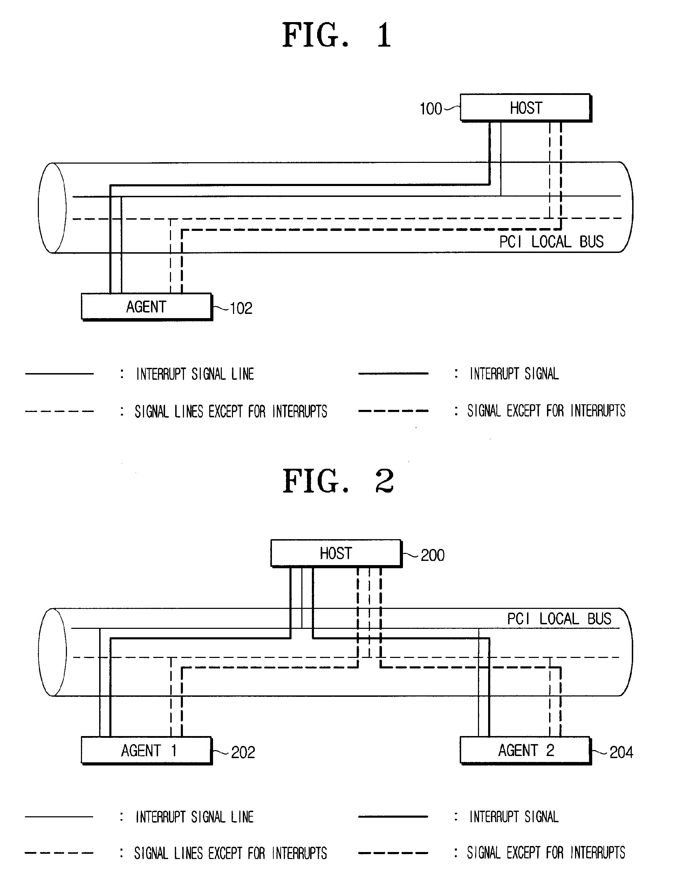

Data transfers and connections between devices on a PCI local bus will now be described with reference to Figure 1.

Figure 1 shows a host 100, an Agent 102, and a PCI local bus to which the host 100 and the Agent 102 are connected. The host 100 is a device for controlling the PCI local bus and the Agent 102 is a device providing additional functions to the host 100 through the PCI local bus. For example, if a PC serves as the host, a network card, sound card, graphic card or the like may serve as agents. Furthermore, if an image-forming apparatus serves as the host, a network printer card, wireless LAN module, hard disk drive (HDD) or the like may serve as agents.

The PCI local bus of Figure 1 consists of two signal lines, connecting the host 100 and the Agent 102. The two signal lines consist of an interrupt signal line and a signal line for transferring signals other than interrupt signals. "Interrupt" refers to the stopping of a current process and carrying out a new process in response to an event. The interrupt signal is a signal requesting the execution of a process in response to an event.

The interrupt signal may, for example, be generated due to power failure, a request by a peripheral device, a data input and output termination and a error occurrence.

The Agent 102 generates interrupt signals on the PCI local bus in order to control the host 100 when state changes or data transfer requests are needed. The host 100 becomes aware of the generation of an interrupt signal by checking the PCI local bus. If an interrupt signal appears on the PCI local bus, the host 100 checks the state of the Agent 102, connected on the PCI local bus, and runs the necessary interrupt service routines.

In Figure 1, the Agent 102 sends interrupt signals to the host 100 using the interrupt signal line and sends signals other than interrupt signals using the signal line.

Figure 2 shows a host 200, two agents 202, 204 and a PCI local bus connecting the host 200 and the two agents 202, 204. The two agents are Agent 1 202 and Agent 2 204. The PCI local bus can have at least one agent, but Figure 2 shows two agents for the convenience of explanation.

Figure 2 shows two signal lines, as in Figure 1, which are an interrupt signal line for transmitting interrupt signals and a signal line for transmitting signals other than interrupts. The agent 204 sends interrupt signals to the host 200 as well as to agent 202 via the host 200. The sending of interrupt signals by Agent 2 204 to the host 200 is the same as the process described above with reference to Figure 1.

However, when Agent 2 204 sends an interrupt signal to Agent 1 202, Agent 2 204 does not send the interrupt signal directly to the Agent 1 202. As described above, the host 200 controls all devices connected to the PCI local bus. Thus, the interrupt signal to be sent from Agent 2 204 to Agent 1 202 is sent via the host 200.

For example, when Agent 2 204 sends a data transfer interrupt and data to Agent 1 202, Agent 2 204 does not have a device driver that can access the memory of Agent 1 202. Thus, Agent 2 204 cannot send an interrupt signal and data to Agent 1 202. The host 200 manages the device drivers for the devices connected to the PCI local bus. Therefore, when Agent 2 204 sends an interrupt signal to the host 200, the host 200 reads out data stored in Agent 2 204. Thus, it is possible that Agent 2 204 first sends data to the host 200, which stored it, and then sends an interrupt signal to the host 200. The host 200 then sends the stored data to Agent 1 202 in response to the received interrupt signal. The host 200 sends data to Agent 1 202 in the same manner as Agent 2 204 sends data to the host 200.

As described above, since Agent 2 204 does not have a device driver for directly controlling Agent 1 202, the host 200 has to mediate data transfers between the two. That is, Agent 2 204 first sends data and an interrupt signal to the host 200, and then the host 200 sends its received data and interrupt signal to Agent 1 202, which increases the traffic on the entire PCI local bus as well as affecting the performance of the host.

The present invention has been developed in order to solve the above drawbacks and other problems associated with the conventional arrangement. An aspect of the present invention is to provide a method for increasing the processing speed of data transferring between agents.

An aspect of the present invention is a method in which a host does not control all agents, but a specific agent controls another agent.

Another aspect of the present invention is to provide a method for increasing a system efficiency by reducing the load of a PCI local bus system.

Yet another aspect of the present invention is to provide a method for reducing the cost for new functions by using existing components.

The foregoing and other objects and advantages are substantially realized by providing a bus system comprising a host for controlling the bus system; a first agent for sending and receiving data to and from the host; and at least one second agent for directly sending and receiving data to and from the first agent.

Preferably, the host initializes a device driver of the first agent to control the first agent.

Preferably, the first and second agents are directly connected through an interrupt signal line for sending and receiving an interrupt signal. The interrupt signal can indicate whether data is ready to be sent occurs.

Preferably, the first and second agents are connected through an interrupt signal line externally provided to the bus system.

The foregoing and other objects and advantages are substantially realized by providing a method for controlling a bus system having a host and at least two agents comprising at least a first agent and at least one second agent. The method comprises the steps of activating the bus system; setting a device driver of the first agent for driving the first agent by the host; and setting a device driver of the second agent for driving the second agent by the first agent.

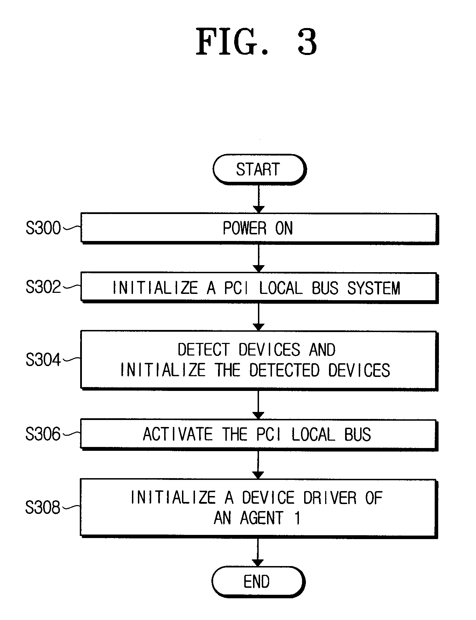

Embodiments of the present invention will now be described, by way of example, with reference to Figures 3 to 7 of the accompanying drawings, in which:
Figure 1 shows a conventional PCI local bus connecting a host and an agent;
Figure 2 shows a conventional PCI local bus connecting a host and two agents;
Figure 3 shows the operations of an agent according to the present invention;

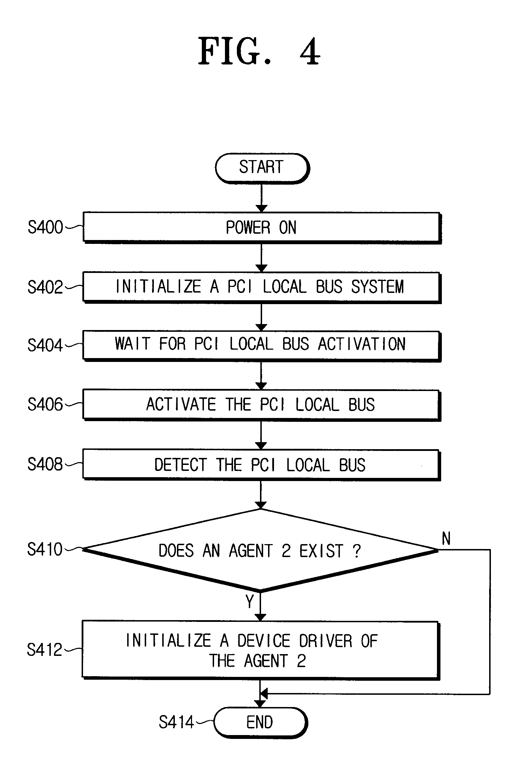

Figure 4 shows the operations of a first agent according to the present invention;

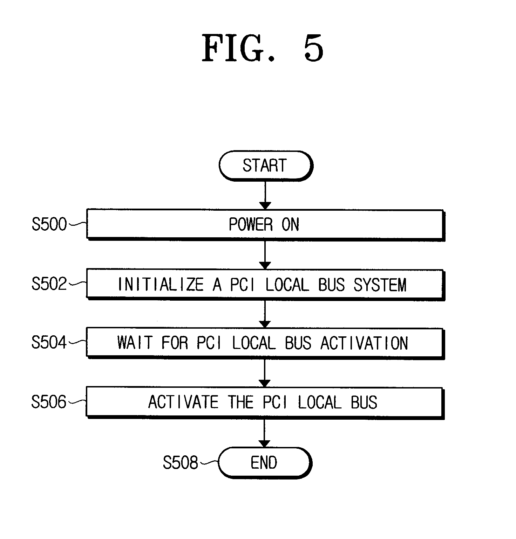

Figure 5 shows the operations of a second agent according to the present invention;

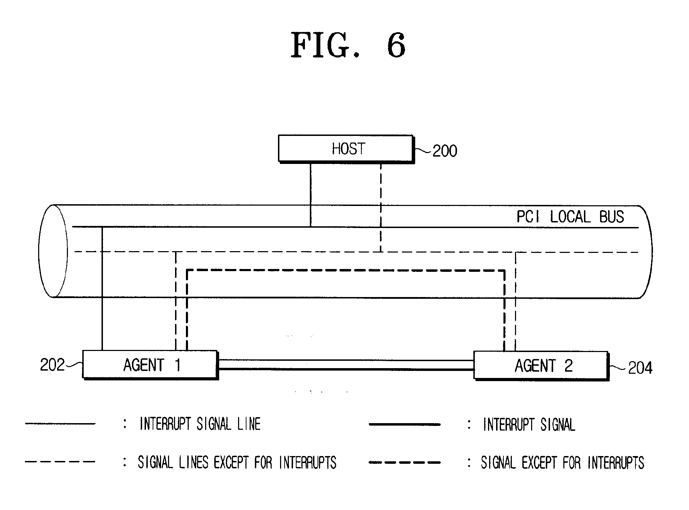

Figure 6 shows a PCI-like local bus sending data from a first agent to a second agent according to the present invention; and

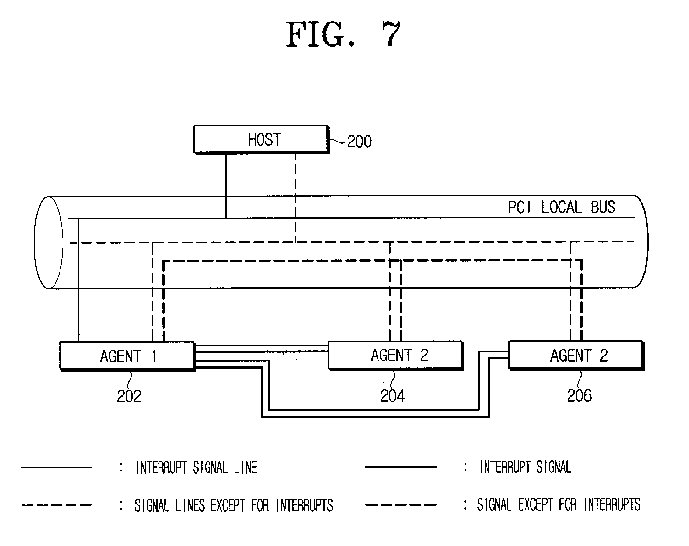

Figure 7 shows another example of a PCI-like local bus sending data from the first agent to the second agent according to the present invention.

Referring to Figure 3, a PCI-like local bus system is turned on (S300). The host then initializes the PCI-like local bus system (S302). With the initialization of the PCI local bus system, the host initializes the information necessary for its own operation. That is, the host initializes the bus memory size, cacheline size and the like. Furthermore, the host initializes variables for activating the PCI-like local bus system.

The host detects all devices constituting the PCI-like local bus system and initializes the detected devices (S304). The initialization of the detected devices includes the process of assigning memory regions, requested by the devices, to the memory addresses. That is, if the Agent 1 requests a memory region x and the Agent 2 requests a memory region y, the host assigns the addresses to avoid the overlapping of the requested memory regions x and y. With the addresses assigned, the devices obtain address information related to the memory to be used by themselves. That is, the devices can use the memory within the assigned addresses.

If the devices of the PCI-like local bus system are successfully initialized, the PCI-like local bus is activated (S306). The host initializes the device drivers for some devices, such as an agent, constituting the PCI-like local bus system (S308). The host can be set in advance to have the device drivers to be initialized for the devices. In an embodiment of the present invention, the host does not initialize the device drivers for all of the devices but initializes the device drivers for some of the devices. The host stores device identifiers for which the device addresses are initialized, and checks whether any of the identities already exist.. If as a result of the check, the host determines that devices having the same identifiers as the stored identifiers exist, the host initializes the device drivers for the existing devices. Through the initialization of the device drivers, the host controls the general operations of the devices whose device drivers have been initialized. That is, the host controls the corresponding devices by determining the use of the assigned addresses. As described above, the host initializes the device drivers for only some of the devices, by means of which the load on the PCI-like local bus system can be reduced.

Agent 1 is a device whose device driver is initialized by the host, as described with reference to Figure 3. The operations of Agent 1, whose device driver is initialized by the host, will be described with reference to Figure 4.

The PCI-like local bus system is turned on (S400). Agent 1 initializes the PCI-like local bus system (S402). Agent 1 requests the host to assign addresses to a memory region for itself as well as to a memory region related to another agent, Agent 2. That is, the existing Agent 1 receives data via the host since it does not have a memory for directly receiving data sent by Agent 2 but, in embodiments of the present invention, Agent 1 can directly receive data sent by Agent 2 since Agent 1 requests the host for a memory region related to Agent 2.

Agent 1 waits for the PCI-like local bus to be activated (S404). The PCI-like local bus is activated (S406). With the PCI-like local bus activated, Agent 1 is assigned addresses for the requested memory regions. That is, Agent 1 is assigned the addresses for the memory region related to Agent 2 as well as a memory region for itself.

Agent 1 detects the PCI local bus (S408). Agent 1 decides whether Agent 2 is detected (S410). Agent 2 is a device whose device driver is initialized by Agent 1. Figure 4 shows that Agent 1 detects only one device in the present example. However, in other embodiments of the present invention, Agent 1 is not limited to detecting only one device. That is, Agent 1 detects all devices whose device drivers are initialized by Agent 1 (S410). However, Figure 4 shows that Agent 1 is limited to detecting one device for the sake of convenience. Agent 1 stores the identifiers of the devices whose device drivers are initialized and decides whether the same identifiers as those stored are detected. If the same identifiers as those stored exist as a result of the decision, Agent 1 initializes the device drivers for the existing devices. In Figure 4, Agent 1 has Agent 2 as a device whose device driver is initialized, and stores the identifier of Agent 2. Thus, Agent 1 decides whether Agent 2 exists on the PCI-like local bus (S410). If Agent 2 is determined to exists as a result of the decision, step S412 is carried out, and, if the Agent 2 is not determined to exist, step S414 is carried out, and the whole process is terminated.

In step S412, Agent 1 initializes the device driver of Agent 2. With step S412 carried out, Agent 1 can control Agent 2. That is, Agent 1 controls Agent 2 by deciding the use of the addresses assigned in relation to Agent 2.

The operation of Agent 2 will now be described with reference to Figure 5.

The PCI-like local bus system is turned on (S500). Agent 2 then initializes the PCI-like local bus system (S502). Agent 2 requests the host for an address assignment in the memory region to be used by itself (S502). Agent 2 waits for the PCI-like local bus to be activated (S504). The PCI-like local bus is activated (S506). With the PCI-like local bus activated, Agent 2 is assigned the addresses of the requested memory region.

Embodiments of the present invention divide the functions carried out in the devices constituting the PCI-like local bus, as stated above into three functions. The three functions are a host controlling the general operations of the devices constituting the PCI-like local bus, agents, like Agent 1, whose operations are controlled by the host, and agents, like Agent 2, whose operations are controlled by another agent, e.g. Agent 1. As stated above, some of the functions of the host are executed in an agent, i.e. Agent 1, so the load to the PCI-like local bus is reduced.

Data transfer from Agent 2 to Agent 1 will now be described with reference to Figure 6.

Figure 6 shows a PCI-like local bus system constituting the host 200, Agent 1 202 and Agent 2 204. In general, the PCI-like local bus system may include other devices in addition to the above devices, but Figure 6 shows only the host 200, Agent 1 202 and Agent 2 204 for the sake of convenience.

As described with reference Figure 3 to Figure 5, Agent 2 204 is controlled by the Agent 1 202. Hereinafter, a description will be made of the relationship between Agents 1 and 2 202, 204. It is assumed that a wire network printer card is connected to the PCI-like local bus in an image-forming apparatus. The wire network printer card processes packets and sends necessary information to the image-forming apparatus. If a wireless function is to be added to the image-forming apparatus, it is not efficient to add a wireless network printer card for use instead of the wire network printer card. In other words, the wire and wireless network printer cards are needed to implement an image-forming apparatus having both wire and wireless functions. However, the image-forming apparatus including wire and wireless network printer cards increases the cost as well as the volume of the image forming apparatus. For such circumstances, it is desirable to add only a wireless module capable of processing wireless packets. That is, it is preferable that the wireless module processes wireless packets and the wire network printer card processes the processed wireless packets. For instance, the wire network printer card carries out the functions of Agent 1 and the wireless module carries out the functions of Agent 2.

As described above, the time for processing packets is increased if the wireless module passes data through the printer (host), and traffic on the PCI-like local bus also increases.

As shown in Figure 6, Agent 1 202 is directly connected to Agent 2 204 by an interrupt signal line. If Agent 2 204 has data to be sent to Agent 1 202, Agent 2 204 sends a signal indicating that it has data using the interrupt signal line. Agent 1 202 becomes aware that there is data, to be sent to it, has been stored in Agent 2 204, using information sent through the interrupt signal line. Since Agent 1 202 has a memory region for Agent 2 204, Agent 1 202 can receive the data without the mediation of the host 200. Agent 2 204 first generates the interrupt to notify Agent 1 202 that Agent 2 204 has data to send to Agent 1 202. Further, Agent 2 204 first sends the data to Agent 1 202 and generates the interrupt to enable Agent 1 202 to process the data that has been sent.

Another process for sending data from Agent 2 to Agent 1 will now be described with reference to Figure 7.

In Figure 7, the PCI-like local bus system has a host 200, Agent 1 202 and Agents 2 204, 206. In general, the PCI-like local bus system may include other devices in addition to the above devices, but Figure 7 shows only the host 200, Agent 1 202, and Agents 2 204, 206 for the sake of convenience.

As described in Figure 3 through Figure 5, the agents 204 and 206 are controlled by the agent 202.

As shown in Figure 7, Agent 1 202 is directly connected to Agents 2 204, 206 by an interrupt signal line. When Agent 2 204 has data to send to Agent 1 202, Agent 2 202 signals that it has data to send using the interrupt signal line. Agent 1 202 becomes aware that the data to be sent to Agent 1 202 has been stored in Agent 2 204, using information sent through the interrupt signal line. Since Agent 1 202 has a memory region for Agent 2 204, Agent 1 202 can receive the data without the mediation of the host 200. Agent 2 204 first generates an interrupt to notify Agent 1 202 that Agent 2 204 has data to be sent to Agent 1 202. Further, Agent 2 204 first sends the data to Agent 1 202, and generates an interrupt, enabling Agent 1 202 to process the data that has been sent.

If Agent 2 206 also has data to be sent to Agent 1 202, Agent 2 206 sends whether it has data using the interrupt signal line. Agent 1 202 becomes aware that the data to be sent to it has been stored in Agent 2 206, using information sent through the interrupt signal line. Since Agent 1 202 has a memory region for Agent 2 206, Agent 1 202 can receive the data without the mediation of the host 200. Agent 2 206 first generates an interrupt, so the Agent 2 206 can notify Agent 1 202 that Agent 2 206 has data to be sent to Agent 1 202. Furthermore, Agent 2 206 first sends the data to Agent 1 202 and generates an interrupt, enabling Agent 1 202 to process the data that has been sent.

Agents 2 204, 206 operate independently with respect to Agent 1 202.

The existing method can be used for the data and interrupts to be sent between the host and agents. That is, embodiments of the present invention disclose a method for processing information sent by agents regardless of the host.

As stated above, embodiments of the present invention enable direct communications between agents without the intervention of the host if a specific agent sends data to other agents, with no need to directly send data to the host, under a PCI ot PCI-like local bus system. Such communications between agents reduce the load to the PCI local bus system, and enables data to be sent at a higher speed.

## Claims

1. A bus system, comprising:
a host for controlling the bus system;
a first agent adapted to send and receive data to and from the host; and
at least one second agent adapted to send and receive data directly to and from the first agent.

2. The bus system as claimed in claim 1, wherein the first and second agents are connected by an interrupt line for notifying each other whether a data signal is sent.

3. The bus system as claimed in claim 2, wherein the first and second agents are connected by an interrupt signal line externally the bus system.

4. The bus system as claimed in claim 1, wherein the host is a control unit of an image-forming apparatus.

5. The bus system as claimed in claim 1, wherein the first agent is a wire network card, and the second agent is a wireless module.

6. The bus system as claimed in claim 1, wherein the second agent sends an interrupt notifying the first agent that data to be sent occurs through the interrupt signal line, and then sends the data.

7. The bus system as claimed in claim 1, wherein the second agent sends data to the first agent, and sends to the first agent through the interrupt signal line an interrupt for processing the data.

8. A method for controlling a bus system having a host and at least a first agent and at least one second agent, comprising the steps of:
activating the bus system;
setting by the host a device driver of the first agent for driving the first agent; and
setting by the first agent a device driver of the second agent for driving the second agent.

9. The method as claimed in claim 8, comprising a step of sending data by the second agent to the first agent by using the set device driver.

10. The method as claimed in claim 9, wherein the second agent sends to the first agent through the interrupt signal line an interrupt notifying the first agent that a data-to-be-sent signal occurs by using the set device driver, and sends data to the first agent.

11. The method as claimed in claim 9, wherein the second agent sends data by using the set device driver, and sends an interrupt for processing the data to the first agent through the interrupt signal line.

12. The method as claimed in claim 8, wherein the step of setting by the host the device driver of the first agent sets in the first agent a memory region for storing only data received from the second agent.

13. The method as claimed in claim 8, wherein the activation step detects the agents constituting the bus system.

14. The method as claimed in claim 8, wherein the first agent detects the second agent constituting the bus system.

15. The method as claimed in claim 8, wherein the activation step initializes the bus system.

16. The method as claimed in claim 8, wherein the bus system is a PCI local bus system.

17. A bus system comprising a host connected to first and second agents by an interrupt bus line for transmitting interrupt signals from the agents to the host and a data bus line, **characterised by** an additional interrupt bus line connecting the first and second agents for transmitting interrupt from the first agent to the second agent.
